(19) **Europäisches Patentamt**

**European Patent Office**

**Office européen des brevets**

(11) **EP 0 794 052 B1**

(12) **FASCICULE DE BREVET EUROPEEN**

(45) Date de publication et mention
de la délivrance du brevet:
**02.05.2003 Bulletin 2003/18**

(51) Int Cl.⁷: **B32B 15/08**, G01N 27/02

(21) Numéro de dépôt: **97400475.6**

(22) Date de dépôt: **28.02.1997**

(54) **Procédé et dispositif de contrôle de la soudabilité de tôles sandwich**

Verfahren und Vorrichtung zur Kontrolle der Schweissbarkeit von Sandwichblechen

Method and device for checking the weldability of sandwich panels

(84) Etats contractants désignés:
**AT BE DE ES FR GB IT LU NL SE**

(30) Priorité: **08.03.1996 FR 9602979**

(43) Date de publication de la demande:
**10.09.1997 Bulletin 1997/37**

(73) Titulaire: **SOLLAC S.A.**
**92800 Puteaux (FR)**

(72) Inventeur: **Guth, Jérôme**
**57000 Metz (FR)**

(74) Mandataire: **Moncheny, Michel et al**
**c/o Cabinet Lavoix**
**2 Place d'Estienne d'Orves**
**75441 Paris Cedex 09 (FR)**

(56) Documents cités:
**EP-A- 0 089 435**     **EP-A- 0 219 104**
**EP-A- 0 324 193**     **EP-A- 0 394 128**
**EP-A- 0 459 875**     **EP-A- 0 493 123**
**EP-A- 0 559 527**     **GB-A- 2 158 255**

**Description**

L'invention est relative au contrôle de qualité de tôles de type tôle sandwich et plus particulièrement au contrôle en continu de la soudabilité de telles tôles.

Les tôles sandwich ont des propriétés d'amortissement des vibrations qui sont mises à profit en particulier pour réduire la propagation des bruits. Elles sont utilisées par exemple pour la fabrication d'éléments de carrosserie de véhicules dans l'industrie automobile ou de panneaux d'habillage d'appareils ménagers dans le domaine de l'électro-ménager.

Les tôles sandwich connues comportent généralement deux parements métalliques séparés par un film en matériau synthétique, comme par exemple un polymère qui constitue non seulement un isolant acoustique mais aussi un isolant électrique.

Pour assembler des tôles sandwich de grandes dimensions, il est courant d'effectuer le raccordement de deux tôles par soudage par résistance.

Or, la couche en polymère étant isolante, la technique très répandue du soudage par résistance ne peut pas être appliquée aux tôles sandwich classiques.

Pour remédier à cet inconvénient, lors de la fabrication des tôles sandwich, la couche en matériau synthétique est chargée d'un matériau conducteur généralement constitué par des billes de nickel de façon que celles-ci soient en contact avec les deux parements métalliques à la fois pour assurer la continuité électrique de la tôle. Pour raccorder deux tôles ainsi fabriquées, on superpose deux de leurs extrémités et on serre ces extrémités entre deux électrodes par lesquelles on fait passer un fort courant électrique. Le passage du courant électrique à travers les billes de nickel réparties dans le film en matériau synthétique provoque un échauffement important qui fait fondre localement les parements métalliques des tôles sandwich, qui se soudent sous l'effet d'une pression exercée par les électrodes.

On comprend alors que pour assurer la soudabilité par résistance de telles tôles sandwich, il faut répartir la charge de particules conductrices en quantité suffisante dans le matériau synthétique, un excès de charge devant toutefois être évité afin de préserver les caractéristiques d'isolant acoustique de la tôle sandwich. Généralement une charge de particules conductrices d'environ 20% en fraction massique de la couche intercalée entre les parements métalliques est utilisée pour assurer la soudabilité par résistance de tôles sandwich, au moins une fraction massique de 5% étant nécessaire.

Pour garantir la soudabilité par résistance de tôles sandwich, il faut donc disposer de moyens de mesure pour contrôler la quantité de charge de particules conductrices dans la couche intercalée entre les deux parements métalliques.

Actuellement, on connaît deux procédés permettant d'évaluer la soudabilité par résistance de tôles sandwich.

Un premier procédé consiste à prélever un échantillon d'une tôle sandwich et à réaliser quelques points de soudure, environ une trentaine, sur cet échantillon. Le grand inconvénient de ce procédé de contrôle réside dans le fait qu'il est destructif car l'échantillon est rendu inutilisable par les points de soudure de contrôle pour une application ultérieure. Un contrôle de fabrication de tôles sandwich bien suivi demande un nombre important d'échantillons ce qui augmente considérablement le coût de fabrication.

Par ailleurs, ce procédé n'est pas applicable à un contrôle continu d'une bande de tôle sandwich, par exemple en sortie d'une installation de fabrication de telles tôles.

Un deuxième procédé est basé sur les radiographies par rayons X qui mettent en évidence la présence de particules conductrices contenues dans les tôles sandwich. Les principaux inconvénients de ce procédé sont un coût élevé pour sa mise en oeuvre et le danger pour le personnel de service dû au rayonnement X de puissance dans un contexte industriel. De plus, ce procédé atteint rapidement ses limites d'application lorsque l'épaisseur des parements de la tôle sandwich devient trop importante.

L'invention vise à pallier ces inconvénients en proposant un procédé de contrôle de soudabilité d'une tôle sandwich qui soit non destructif, fiable, peu cher et qui ne présente pas de danger pour le personnel.

A cet effet l'invention a pour objet un procédé de détermination de la fraction massique d'au moins un de deux constituants, l'un formé par des particules conductrices et l'autre formé par un matériau électriquement isolant, d'une couche intercalée entre deux parements métalliques formant ensemble avec ladite couche intercalée une tôle sandwich, ledit constituant conducteur établissant un contact électrique entre les deux parements métalliques, caractérisé par le fait que :

- on mesure à l'aide d'un signal d'une fréquence $\underline{f}$ déterminée, appliqué à deux électrodes disposées l'une en face de l'autre, chaque électrode étant en contact respectivement avec un parement métallique correspondant, le déphasage tension/courant, $\varphi$, dû aux propriétés résistive et capacitive de la tôle sandwich,
- on assimile la portion de la tôle sandwich entre les électrodes à un circuit RC parallèle équivalent, et
- on calcule à partir de la valeur de tg $\varphi$ qui est l'expression du rapport entre la composante capacitive et la composante résistive de l'impédance du circuit RC équivalent, la fraction massique $Y_R$, $Y_C$ de l'un au moins desdits constituants,les fractions massiques de ces constituants étant données par les relations respectives:

$$Y_R = \frac{1}{1 - \lambda \, tg \, \varphi}$$

et

$$Y_C = \frac{- \lambda \, tg \, \varphi}{1 - \lambda \, tg \, \varphi} \, ,$$

$\lambda$ étant une constante déterminée par la fréquence $\underline{f}$ du signal appliqué aux deux électrodes, par des propriétés électriques de chaque constituant de la couche intercalée entre les parements métalliques et par les masses volumiques desdits constituants.

L'invention a de plus pour objet un procédé de contrôle de qualité d'une tôle sandwich formée par deux parements métalliques entre lesquels est intercalée une couche formée de deux constituants comprenant un matériau électriquement isolant et des particules conductrices établissant un contact électrique entre les deux parements métalliques, caractérisé par le fait que :

- on détermine la fraction massique d'un des deux constituants de la couche intercalée entre les deux parements métalliques en appliquant le procédé défini ci-dessus,
- on fixe au moins un seuil de fraction massique du constituant dont la fraction massique a été déterminé, ledit seuil correspondant à une propriété recherchée de la tôle sandwich, et
- on compare la valeur de la fraction massique mesurée au seuil fixé pour déterminer si la tôle sandwich satisfait ou non à la propriété requise.

L'invention a également pour objet un appareillage de contrôle de qualité d'une tôle sandwich permettant de mettre en oeuvre le procédé défini ci-dessus, caractérisé en ce qu'il comporte deux électrodes disposées l'une en face de l'autre, chaque électrode étant en contact respectivement avec un parement métallique correspondant de la tôle sandwich et étant reliée à une entrée d'un dispositif de mesure du déphasage tension/courant, $\varphi$, la sortie de l'unité de mesure étant reliée à l'entrée d'une unité d'exploitation qui calcule la fraction massique desdits constituants de ladite couche et qui compare la fraction massique obtenue avec au moins un seuil prédéterminé correspondant à une propriété de ladite tôle sandwich pour déterminer si la tôle sandwich satisfait ou non à la propriété requise.
D'autres caractéristiques et avantages de l'invention ressortiront de la description suivante donnée à titre d'exemple sans caractère limitatif, en regard des dessins annexés, sur lesquels :

La figure 1 est une vue en coupe d'une tôle sandwich entre deux électrodes de mesure et d'un circuit électrique équivalent représentant les propriétés électriques de la tôle sandwich;
La figure 2 est une vue schématique en perspective d'un appareillage de contrôle de qualité d'une bande de tôle sandwich en défilement.

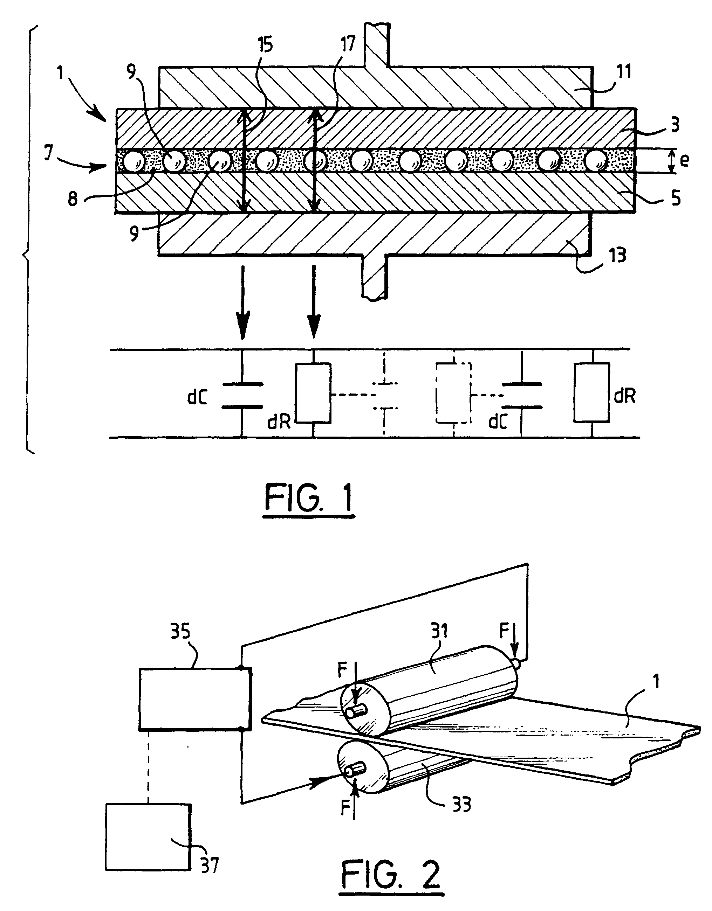

Sur la figure 1, on voit une tôle sandwich 1 comportant deux parements métalliques 3 et 5. Une couche 7 formée par un matériau 8 électriquement et acoustiquement isolant, par exemple un polymère, chargé de particules conductrices 9, par exemple des billes de nickel, est intercalée entre lesdits parements 3 et 5. Les billes de nickel 9 ont généralement un diamètre de 50 $\mu$m et sont réparties uniformément dans ladite couche 7. L'espacement $\underline{e}$ entre les parements métalliques 3 et 5 est tel que les billes de nickel 9 sont en contact à la fois avec les deux parements métalliques 3 et 5 pour assurer une continuité électrique entre les parements.
Une électrode 11, 13 est appliquée respectivement sur chaque parement métallique 3, 5. Ces deux électrodes sont en face l'une de l'autre et la tôle sandwich est intercalée entre elles.
Pour caractériser les propriétés électriques d'une telle tôle sandwich 1 en réponse à un signal de fréquence $\underline{f}$ appliqué aux électrodes 11 et 13, on analyse le passage d'un courant d'un parement à l'autre suivant deux lignes de courant 15 et 17, l'une 15 ne passant que par le polymère 8 de la couche 7, l'autre, 17, passant par une bille de nickel 9.
Suivant la ligne de courant 15, le polymère 8 constitue un isolant électrique entre les deux parements métalliques 3 et 5. A cet endroit, la tôle sandwich peut être assimilée à une capacité électrique élémentaire dC.
Suivant la ligne de courant 17, le courant passe par une bille de nickel 9 qui établit un contact électrique entre les deux parements métalliques 3 et 5, le courant étant limité par la résistance électrique de la bille qui dépend de la résistivité propre $\sigma_R$ du nickel. A cet endroit, la tôle sandwich peut être assimilée à une résistance électrique élémentaire dR.

Ainsi, la couche 7 formée par le polymère 8 chargé de particules conductrices 9 et intercalée entre les parements 3 et 5 de la tôle sandwich peut être assimilée à une succession de résistances et de capacités élémentaires, respectivement dR et dC, mises en parallèles comme cela est représenté à la partie inférieure de la figure 1.

Les flèches dans le prolongement des lignes de courant 15 et 17 indiquent laquelle des propriétés électriques élémentaires de la tôle sandwich est associée à chaque ligne de courant 15, 17.

L'impédance élémentaire d'une association en parallèle de dR et dC traversée par un courant alternatif de fréquence $\underline{f}$ est donnée par la relation :

$$dZ = \frac{dR}{1 + j\ dR\ dC\ 2\pi f} \tag{1}$$

La résistance élémentaire dR et la capacité élémentaire dC s'expriment en fonction des surfaces élémentaires $dA_R$ et $dA_C$ de passage de lignes de courant respectivement dans les parties résistives et capacitives de la tôle. La surface totale $A_R + A_C$ de passage de lignes de courant correspond à la surface des parements métalliques en regard traversée par la totalité du courant. Dans une première approximation, on considère que cette surface totale $A_R + A_C$ correspond à la surface de contact parements métalliques 3, 5 -électrodes 11, 13.

La résistance élémentaire dR pour des particules conductrices 9 en un matériau de résistivité $\sigma_R$ est déterminée par :

$$dR = \frac{\sigma_R e}{dA_R} \tag{2}$$

En considérant la permittivité diélectrique $\varepsilon$ du polymère 8 entre les parements 3 et 5, on obtient la capacité électrique élémentaire dC :

$$dC = \frac{\varepsilon\ dA_c}{e} \tag{3}$$

En combinant les équations (1), (2) et (3), on obtient l'impédance totale $Z_T$ donnée par la mise en parallèle des impédances élémentaires dZ :

$$\frac{1}{Z_T} = \int_{A_R + A_C} \frac{1}{dZ} = \frac{A_R}{\sigma_R e} + j\ \frac{2\pi\varepsilon\ f\ A_C}{e} \tag{4}$$

Les propriétés résistives et capacitives de la couche 7 sont donc données par la mise en parallèle d'une résistance correspondant à un effet résistif total proportionnel à la quantité de particules conductrices et d'un condensateur correspondant à un effet capacitif total proportionnel à la quantité de polymère. La proportion de chacun de ces effets est égale, à un facteur constant près, au rapport des sections de passage de courant $A_R$ et $A_C$ à travers les particules conductrices et à travers le polymère respectivement. En considérant l'équation (4) et en calculant de façon connue la tg $\varphi$, $\varphi$ étant le déphasage tension/courant causé par l'impédance totale $Z_T$, on obtient, compte tenu du fait que l'épaisseur $\underline{e}$ de la couche 7 est constante, le rapport des volumes $V_C$ et $V_R$ occupés respectivement par le polymère 8 et les particules conductrices 9 dans cette couche 7 par la relation suivante :

$$\frac{V_C}{V_R} = -\frac{tg\ \varphi}{\varepsilon \sigma_R 2\pi f} \tag{5}$$

C'est ce rapport qui permet de déduire la fraction massique d'un des deux constituants de la couche 7 intercalée entre les deux parements métalliques à partir de la mesure d'une grandeur liée aux propriétés résistives et capacitives de la tôle sandwich.

Connaissant les masses volumiques $\rho_C$ et $\rho_R$ du polymère et des particules conductrices respectivement, on obtient la fraction massique des particules conductrices $Y_R$ réparties dans le polymère par la relation :

$$Y_R = \cfrac{1}{1 + \cfrac{\rho_C}{\rho_R}\cfrac{V_C}{V_R}} \qquad (6a)$$

On obtient la fraction massique du polymère $Y_C$ par la relation :

$$Y_C = \cfrac{1}{1 + \cfrac{\rho_R}{\rho_C}\cfrac{V_R}{V_C}} \qquad (6b)$$

En combinant chaque équation (6a) et (6b) avec l'équation (5), on obtient alors les fractions massiques $Y_R$ et $Y_C$ exprimés à partir de paramètres connus par les relations suivantes :

$$Y_R = \frac{1}{1 - \lambda\ \mathrm{tg}\ \varphi} \qquad (7a)$$

$$Y_C = \frac{-\lambda\ \mathrm{tg}\ \varphi}{1 - \lambda\ \mathrm{tg}\ \varphi} \qquad (7b)$$

où $\lambda$ est une constante pour une fréquence $\underline{f}$ déterminée. $\lambda$ est donnée par la relation :

$$\lambda = \frac{\rho_C}{\rho_R}\ \frac{1}{\varepsilon\sigma_R 2\pi f} \qquad (8)$$

Les fractions massiques du polymère et des particules conductrices vérifient toujours la relation:

$$Y_C + Y_R = 1 \qquad (9)$$

Par conséquent, la détermination d'une des deux fractions massiques $Y_C$ ou $Y_R$ permet de déduire par soustraction l'autre.

Pour déterminer la fraction massique des particules conductrices en appliquant la relation (7a), on peut mesurer le déphasage $\varphi$ par deux méthodes connues.

Une première méthode consiste à mesurer l'impédance $Z_T$ entre les deux électrodes 11 et 13 en contact respectivement avec un des deux parements métalliques 3 et 5 à l'aide d'un signal d'une fréquence $\underline{f}$ déterminée. On extrait ensuite de la valeur de l'impédance $Z_T$ la résistance équivalente R et la réactance X. Puis on détermine tg $\varphi$ en calculant le rapport entre la réactance X et la résistance équivalente R.

Une deuxième méthode consiste à mesurer à l'aide d'un signal d'une fréquence $\underline{f}$ déterminée le retard $\underline{dT}$ entre une tension alternative appliquée aux électrodes 11, 13 et le courant alternatif engendré par celle-ci. Connaissant la fréquence $\underline{f}$ et ledit retard $\underline{dT}$, on calcule ensuite le déphasage $\varphi$, puis tg $\varphi$.

Un exemple d'un appareillage de détermination de la fraction massique et de contrôle de qualité d'une tôle sandwich est représenté sur la figure 2.

Cet agencement comprend deux électrodes 31 et 33 en forme de rouleaux entre lesquelles est serré un tronçon d'une bande de tôle sandwich 1 en défilement, les largeurs des rouleaux 31 et 33 et de la bande étant sensiblement égales. Il n'est, bien évidemment, pas absolument nécessaire que la largeur des rouleaux 31 et 33 soit égale à celle de la bande. Les deux rouleaux 31 et 33 sont montés rotatifs dans un bâti non représenté de façon que la force de serrage de la tôle sandwich appliquée aux rouleaux 31, 33 représentée par des flèches F, puisse être réglée, les axes de rotation des rouleaux 31 et 33 étant sensiblement perpendiculaires à la direction de défilement de la bande. La bande de tôle sandwich 1 défile entre les rouleaux 31 et 33 et la détermination de la fraction massique d'un des deux constituants de la couche 7 selon le procédé de l'invention, s'effectue au cours de ce défilement. Les rouleaux 31 et 33 sont réalisés en une matière de faible résistance électrique, par exemple en cuivre.

Chacune des deux électrodes formées par les deux rouleaux 31 et 33 est reliée électriquement à une entrée d'une unité de mesure 35, par exemple un impédancemètre connu en soi. L'impédancemètre 35 fournit un signal de sortie correspondant au module du déphasage $\varphi$ tension/courant. Puisque la tôle sandwich ne présente que des propriétés résistives et capacitives, le signe du déphasage est déterminé. La sortie de l'impédancemètre 35 est reliée à l'entrée d'une unité d'exploitation 37 par exemple un ordinateur personnel PC. Ce PC 37 est programmé pour calculer les fractions massiques des deux constituants de la couche 7 en appliquant les relations (7a) et (7b) ou la relation (9) en combinaison avec l'une ou l'autre des relations (7a) et (7b) et à les enregistrer. Le PC 37 est avantageusement chargé d'un programme informatique lui permettant d'exécuter des opérations de seuillage et de comparaison qui vont être décrites ci-après, pour déterminer si la tôle sandwich 1 présente ou non une des propriétés recherchées telles que la soudabilité ou l'amortissement de vibrations. Par ailleurs, le PC 37 commande un dispositif de marquage de tôle non représenté au cas où celle-ci ne serait pas conforme aux conditions de qualité requises.

Pour contrôler la qualité d'une tôle sandwich, en vue de sa soudabilité par résistance et de ses propriétés d'amortissement de vibrations, on détermine d'abord à l'aide de l'appareillage précité, la fraction massique par exemple des particules conductrices 9 réparties uniformément dans le polymère 8 de la couche 7. Ensuite, on compare la valeur obtenue à un seuil minimum $Y_R{}^{min}$, par exemple $Y_R{}^{min} = 5\%$, et à un seuil maximum $Y_R{}^{MAX}$ par exemple $Y_R{}^{MAX} = 20\%$ prédéterminés. En dessous de $Y_R{}^{min}$, la soudabilité de la tôle n'est plus assurée et au dessus de $Y_R{}^{MAX}$, les capacités d'amortissement de vibrations sont fortement dégradées. Si la valeur déterminée de la fraction massique n'est pas comprise dans l'intervalle délimité par ces seuils minimal et maximal, on considère que la tôle sandwich est de mauvaise qualité. Dans le cas contraire, la tôle sandwich satisfait aux conditions de qualité requises.

Bien entendu, pour le contrôle de qualité, on peut également déterminer la fraction massique $Y_C$ du matériau isolant 8 en fixant des seuils minimal $Y_C{}^{min}$ et maximal $Y_C{}^{MAX}$ correspondants. En dessous de $Y_C{}^{min}$, les capacités d'amortissement de vibrations sont fortement dégradées et au dessus de $Y_C{}^{MAX}$, la soudabilité de la tôle n'est plus assurée.

Selon un autre exemple d'appareillage de détermination de la fraction massique et de contrôle de qualité d'une tôle sandwich, non représenté, l'agencement comprend deux électrodes en forme de molettes déplaçables transversalement sur toute la largeur de la bande de tôle sandwich en défilement, de façon à réaliser un balayage de la bande en cours de défilement. Ces deux molettes rotatives remplacent alors les deux rouleaux et sont montées mobiles en rotation et en translation dans un bâti similaire à celui décrit dans l'exemple de réalisation représenté sur la figure 2.

**Revendications**

1.  Procédé de détermination de la fraction massique d'au moins un de deux constituants (8, 9), l'un formé par des particules conductrices (9) et l'autre formé par un matériau électriquement isolant (8), d'une couche (7) intercalée entre deux parements métalliques (3, 5) formant ensemble avec ladite couche (7) intercalée une tôle sandwich (1), ledit constituant conducteur (9) établissant un contact électrique entre les deux parements métalliques (3, 5), **caractérisé par le fait que** :

    -   on mesure à l'aide d'un signal d'une fréquence $\underline{f}$ déterminée, appliqué à deux électrodes (11, 13) disposées l'une en face de l'autre, chaque électrode (11, 13) étant en contact respectivement avec un parement métallique (3, 5) correspondant, le déphasage tension/courant, $\varphi$, dû aux propriétés résistive et capacitive de la tôle sandwich (1),
    -   on assimile la portion de la tôle sandwich (1) entre les électrodes (11, 13) à un circuit RC parallèle équivalent, et
    -   on calcule à partir de la valeur de tg $\varphi$ qui est l'expression du rapport entre la composante capacitive et la composante résistive de l'impédance du circuit RC équivalent, la fraction massique $Y_R$, $Y_C$ de l'un au moins desdits constituants, les fractions massiques de ces constituants étant données par les relations respectives:

    $$Y_R = \frac{1}{1 - \lambda \ tg \ \varphi}$$

    et

    $$Y_C = \frac{1}{1 - \lambda \ tg \ \varphi} \ ,$$

    $\lambda$ étant une constante déterminée par la fréquence $\underline{f}$ du signal appliqué aux deux électrodes (11, 13), par des propriétés électriques de chaque constituant (8, 9) de la couche (7) intercalée entre les parements métalliques (3, 5) et par les masses volumiques desdits constituants (8, 9).

2.  Procédé selon la revendication 1, **caractérisé par le fait qu'**on calcule la fraction massique de l'autre constituant, dont la fraction massique n'a pas été déterminée par la relation :

**EP 0 794 052 B1**

$$Y_C - Y_R = 1$$

3. Procédé de contrôle de qualité d'une tôle sandwich (1) formée par deux parements métalliques (3, 5) entre lesquels est intercalée une couche (7) formée de deux constituants (8, 9) comprenant un matériau électriquement isolant (8) et des particules conductrices (9) établissant un contact électrique entre les deux parements métalliques (3, 5), **caractérisé par le fait que** :

- on détermine la fraction massique d'un des deux constituants (8, 9) de la couche (7) intercalée entre les deux parements métalliques (3, 5) en appliquant le procédé selon l'une des revendications 1 et 2,
- on fixe au moins un seuil de fraction massique du constituant dont la fraction massique a été déterminé, ledit seuil correspondant à une propriété recherchée de la tôle sandwich (1), et
- on compare la valeur de la fraction massique mesurée au seuil fixé pour déterminer si la tôle sandwich satisfait ou non à la propriété requise.

4. Procédé de contrôle selon la revendication 3, **caractérisé en ce que** la propriété recherchée de la tôle sandwich (1) est la soudabilité par résistance d'une telle tôle (1) et **en ce que** le seuil de fraction massique fixé constitue un seuil minimal lorsqu'on détermine la fraction massique des particules conductrices (9) et un seuil maximal lorsqu'on détermine la fraction massique du matériau isolant (8).

5. Procédé de contrôle selon la revendication 3, **caractérisé en ce que** la propriété recherchée de la tôle sandwich (1) est sa capacité d'amortissement de vibrations et **en ce que** le seuil de fraction massique fixé constitue un seuil maximal lorsqu'on détermine la fraction massique des particules conductrices (9) et un seuil minimal lorsqu'on détermine la fraction massique du matériau isolant (8).

6. Procédé de contrôle selon les revendications 3 à 5, **caractérisé en ce qu'**on fixe deux seuils de fraction massique, l'un correspondant à la soudabilité de la tôle sandwich (1), et l'autre correspondant sa capacité d'amortissement de vibrations.

7. Procédé de contrôle de qualité selon l'une quelconque des revendications 3 à 6, **caractérisé en ce que** la tôle sandwich (1) est une bande de tôle sandwich en défilement, et **en ce qu'**on mesure au moins une fraction massique d'un des deux constituants (8, 9) de la couche (7) intercalée au cours de ce défilement.

8. Appareillage de contrôle de qualité d'une tôle sandwich permettant de mettre en oeuvre le procédé suivant l'une quelconque des revendications 3 à 7, **caractérisé en ce qu'**il comporte deux électrodes (11, 13; 31, 33) disposées l'une en face de l'autre, chaque électrode (11, 13; 31, 33) étant en contact respectivement avec un parement métallique correspondant (3, 5) de la tôle sandwich (1) et étant reliée à une entrée d'un dispositif de mesure (35) du déphasage tension/courant, φ, la sortie de l'unité de mesure (35) étant reliée à l'entrée d'une unité d'exploitation (37) qui calcule la fraction massique desdits constituants (8, 9) de ladite couche (7) et qui compare la fraction massique obtenue avec au moins un seuil prédéterminé correspondant à une propriété de ladite tôle sandwich (1) pour déterminer si la tôle sandwich (1) satisfait ou non à la propriété requise.

9. Appareillage selon la revendication 8, **caractérisé en ce que** les électrodes (31, 33) sont réalisées en forme de rouleaux en contact avec la bande de tôle sandwich en défilement montés rotatifs dans un bâti, la force de serrage desdits rouleaux étant réglable.

10. Appareillage selon l'une quelconque des revendications 8 à 9, **caractérisé en ce que** l'unité d'exploitation (37) est un ordinateur chargé d'un programme informatique qui effectue les étapes de calcul, de comparaison avec des seuils prédéterminés et qui commande un dispositif de marquage de tôle au cas où celle-ci ne présente pas la qualité requise.

11. Appareillage selon l'une quelconque des revendications 8 à 10, **caractérisé en ce que** le dispositif de mesure (35) est un impédancemètre.

**Patentansprüche**

1. Verfahren für die Bestimmung des Masseanteils von mindestens zwei Komponenten (8, 9), wobei eine dieser

7

Komponenten aus leitenden Partikeln (9) und die andere Komponente aus einem elektrisch isolierenden Material (8) einer Schicht (7) besteht, die zwischen zwei metallischen Außenblechen (3, 5) angeordnet ist, die zusammen mit dieser dazwischen angeordneten Schicht (7) ein Sandwichblech (1) bilden, wobei die leitende Komponente (9) einen elektrischen Kontakt zwischen den beiden metallischen Außenblechen (3, 5) herstellt,
**dadurch gekennzeichnet, dass**

- mit Hilfe eines Signals mit einer bestimmten Frequenz f, das auf zwei gegenüberliegend angeordnete Elektroden (11, 13) beaufschlagt wird, wobei diese beiden Elektroden (11, 13) jeweils mit einem der entsprechenden metallischen Außenblechen (3, 5) in Kontakt steht, die Phasenverschiebung Spannung/Stromstärke $\varphi$ gemessen wird, welche auf den resistiven und kapazitiven Eigenschaften des Sandwichbleches (1) beruht,

- der Anteil des Sandwichbleches zwischen den Elektroden (11, 13) einem entsprechenden parallelen RC-Kreis gleichgesetzt wird, und

- auf der Grundlage des Wertes von tg $\varphi$, welcher das Verhältnis zwischen der kapazitiven Komponente und der resistiven Komponente des Wechselstromwiderstandes des entsprechenden RC-Kreises ausdrückt, der Masseanteil $Y_R$, $Y_C$ von mindestens einer dieser Komponenten berechnet wird, wobei die Masseanteile dieser Komponenten durch folgende Gleichungen angegeben werden:

$$Y_R = \frac{1}{1-\lambda \ tg \ \varphi}$$

und

$$Y_C = \frac{-\lambda \ tg \ \varphi}{1 - \lambda \ tg \ \varphi}$$

darin ist $\lambda$ die Konstante, welche durch die Frequenz f des auf die beiden Elektroden (11, 13) durch die elektrischen Eigenschaften aller Komponenten (8, 9) der zwischen den metallischen Außenblechen (3, 5) angeordneten Schicht (7) und durch die Volumenmasse dieser Komponenten (8, 9) beaufschlagt wird.

2. Verfahren nach Anspruch 1,
   **dadurch gekennzeichnet, dass**
   der Masseanteil der anderen Komponente berechnet wird, deren Masseanteil nicht durch die folgende Gleichung bestimmt worden ist

$$Y_C + Y_R = 1$$

3. Verfahren für die Kontrolle der Qualität eines Sandwichbleches (1), das aus zwei metallischen Außenblechen (3, 5) besteht, zwischen denen eine Schicht (7) angeordnet ist, welche aus zwei Komponenten (8, 9) besteht, und die ein elektrisch isolierendes Material (8) und leitende Partikel (9) enthält, welche einen elektrischen Kontakt zwischen den beiden metallischen Außenblechen herstellt,
   **dadurch gekenzeichnet, dass**

   - der Masseanteil einer der beiden Komponenten (8, 9) der Schicht (7), die zwischen den beiden metallischen Außenblechen (3, 5) angeordnet ist, durch Anwendung des Verfahrens nach einem der Ansprüche 1 und 2 bestimmt wird,

   - und mindestens ein Schwellenwert des Masseanteils der Komponente festgelegt wird, deren Masseanteil bestimmt worden ist, wobei dieser Schwellenwert der gewünschten Eigenschaft des Sandwichbleches (1) entspricht, und

   - der Wert des Masseanteils, der an dem festgelegten Schwellenwert gemessen worden ist, mit diesem festgelegten Schwellenwert verglichen wird, um festzustellen, ob das Sandwichblech den geforderten Eigenschaften entspricht, oder diesen Eigenschaften nicht entspricht.

4. Kontrollverfahren nach Anspruch 3,

**dadurch gekenzeichnet, dass**

die gewünschten Eigenschaften des Sandwichbleches (1) aus der Schweißbarkeit durch die Widerstandsschweißung eines solchen Bleches (1) bestehen, und dadurch, dass der festgelegte Masseanteil einen minimalen Schwellenwert bildet, wenn der Masseanteil der leitenden Partikel (9) gemessen wird, und einen maximalen Schwellenwert bildet, wenn der Masseanteil des isolierenden Materials (8) gemessen wird.

5. Kontrollverfahren nach Anspruch 3,
   **dadurch gekenzeichnet, dass**
   die gewünschten Eigenschaften des Sandwichbleches (1) aus seiner Fähigkeit bestehen, Vibrationen zu dämpfen, und dass der festgesetzte Schwellenwert einen maximalen Schwellenwert bildet, wenn der Masseanteil der leitenden Partikel (9) gemessen wird, und einen minimalen Schwellenwert bildet, wenn der Masseanteil des isolierenden Materials (8) bestimmt wird.

6. Kontrollverfahren nach einem der Ansprüche 3 bis 5,
   **dadurch gekenzeichnet, dass**
   zwei Schwellenwerte für den Masseanteil festgelegt werden, wobei der eine Schwellenwert der Schweißbarkeit des Sandwichbleches (1) entspricht, während der andere Schwellenwert der Kapazität der Dämpfung von Vibrationen entspricht.

7. Kontrollverfahren der Qualität nach einem der Ansprüche 3 bis 6,
   **dadurch gekenzeichnet, dass**
   das Sandwichblech (1) aus einem durchlaufenden Blechband besteht, und dadurch, dass mindestens ein Masseanteil einer der beiden Komponenten (8, 9) der durchlaufenden dazwischen angeordneten Schicht (7) während diesem Durchlauf gemessen wird.

8. Vorrichtung für die Kontrolle der Qualität eines Sandwichbleches, die mit Hilfe des Verfahrens nach einem der Ansprüche 3 bis 7 durchgeführt wird,
   **dadurch gekenzeichnet, dass**
   sie zwei gegenüberliegend angeordnete Elektroden (11, 13; 31, 33) enthält, wobei jede der Elektroden (11, 13; 31, 33) jeweils mit einem metallischen Außenblech (3, 5) des Sandwichbleches (1) in Kontakt steht und an den Eingang einer Messvorrichtung (35) für die Messung der Phasenverschiebung Spannung/Stromstärke φ angeschlossen ist, während der Ausgang der Messvorrichtung (35) an den Eingang einer Auswertungsvorrichtung (37) angeschlossen ist, welche den Masseanteil der Komponenten (8, 9) der Schicht (7) berechnet und den gemessenen Masseanteil mit mindestens einem vorbestimmten Schwellenwert vergleicht, welcher einer Eigenschaft des Sandwichbleches (1) entspricht, um festzustellen, ob das Sandwichblech (1) die geforderten Eigenschaften erfüllt oder diese Eigenschaften nicht erfüllt.

9. Vorrichtung each Anspruch 8,
   **dadurch gekennzeichnet, dass**
   die Elektroden (31, 33) die Form von Rollen haben, welche mit dem durchlaufenden Sandwichblech in Kontakt stehen und drehend in einem Gerüst angeordnet sind, und dass die Spannkraft dieser Rollen reguliert werden kann.

10. Vorrichtung nach einem der Ansprüche 8 bis 9,
    **dadurch gekennzeichnet, dass**
    die Auswertungseinheit (37) aus einem Rechner besteht, in den ein Informatikprogramm geladen ist, welches die verschiedenen Berechnungsetappen für den Vergleich mit den vorbestimmten Schwellenwerten durchführt, und eine Vorrichtung für die Kennzeichnung von Blechen steuert, wenn diese Bleche nicht die gewünschte Qualität aufweisen.

11. Vorrichtung nach einem der Ansprüche 8 bis 10,
    **dadurch gekennzeichnet, dass**
    die Messvorrichtung (35) ein Widerstandsmesser ist.

**Claims**

1. Method for determining the mass fraction of at least one of two components (8, 9), one formed by conductive particles (9) and the other formed by an electrically insulating material (8), of a layer (7) which is interposed between two metal layers (3, 5) forming, together with the interposed layer (7), a sandwich sheet (1), the conductive component (9) establishing electrical contact between the two metal layers (3, 5), **characterised:**

- **in that** the voltage/current phase shift, $\varphi$, resulting from the resistive and capacitive properties of the sandwich sheet (1), is measured by means of a signal having a given frequency $\underline{f}$ which is applied to two electrodes (11, 13) which are arranged opposite one another, each electrode (11, 13) being in contact with a corresponding metal layer (3, 5),
- **in that** the portion of the sandwich sheet (1) between the electrodes (11, 13) is associated with an equivalent parallel RC circuit, and
- **in that**, starting from the value tg $\varphi$, which is the expression of the relationship between the capacitive component and the resistive component of the impedance of the equivalent RC circuit, the mass fraction $Y_R$, $Y_C$ of at least one of the components is calculated, the mass fractions of those components being given by the respective relationships:

$$Y_R = \frac{1}{1 - \lambda \; tg \; \varphi}$$

and

$$Y_C = \frac{-\lambda \; tg \; \varphi}{1 - \lambda \; tg \; \varphi},$$

$\lambda$ being a constant determined by the frequency $\underline{f}$ of the signal applied to the two electrodes (11, 13) by the electrical properties of each component (8, 9) of the layer (7) interposed between the metal layers (3, 5) and by the densities of the components (8, 9).

2. Method according to claim 1, **characterised in that** the mass fraction of the other component whose mass fraction has not been determined is calculated by the relationship:

$$Y_C + Y_R = 1.$$

3. Method for controlling the quality of a sandwich sheet (1) which is formed by two metal layers (3, 5), between which is interposed a layer (7) which is formed by two components (8, 9) comprising an electrically insulating material (8) and conductive particles (9) which establish electrical contact between the two metal layers (3, 5), **characterised:**

- **in that** the mass fraction of one of the two components (8, 9) of the layer (7) interposed between the two metal layers (3, 5) is determined by carrying out the method according to either claim 1 or claim 2,
- **in that** at least one threshold is fixed for the mass fraction of the component whose mass fraction has been determined, the threshold corresponding to a desired property of the sandwich sheet (1), and
- **in that** the value of the mass fraction measured is compared with the fixed threshold in order to determine whether or not the sandwich sheet complies with the necessary property.

4. Control method according to claim 3, **characterised in that** the desired property of the sandwich sheet (1) is the resistance weldability of such a sheet (1), and **in that** the fixed mass fraction threshold constitutes a minimum threshold when the mass fraction of the conductive particles (9) is determined and a maximum threshold when the mass fraction of the insulating material (8) is determined.

5. Control method according to claim 3, **characterised in that** the desired property of the sandwich sheet (1) is its capacity for attenuating vibrations, and **in that** the fixed mass fraction threshold constitutes a maximum threshold when the mass fraction of the conductive particles (9) is determined and a minimum threshold when the mass fraction of the insulating material (8) is determined.

6. Control method according to claims 3 to 5, **characterised in that** two mass fraction thresholds are fixed, one corresponding to the weldability of the sandwich sheet (1) and the other corresponding to the capacity thereof for attenuating vibrations.

7. Quality control method according to any one of claims 3 to 6, **characterised in that** the sandwich sheet (1) is a sandwich sheet strip in motion, and **in that** at least one mass fraction of one of the two components (8, 9) of the interposed layer (7) is measured during this motion.

8. Quality control apparatus for a sandwich sheet which allows the method according to any one of claims 3 to 7 to be carried out, **characterised in that** it comprises two electrodes (11, 13; 31, 33) which are arranged opposite one another, each electrode (11, 13; 31, 33) being in contact with a corresponding metal layer (3, 5) of the sandwich sheet (1) and being connected to an input of a device (35) for measuring the voltage/current phase shift, φ, the output of the measuring unit (35) being connected to the input of an operating unit (37) which calculates the mass fraction of these components (8, 9) of the layer (7) and which compares the mass fraction obtained with at least one predetermined threshold which corresponds to a property of the sandwich sheet (1) in order to determine whether or not the sandwich sheet (1) complies with the desired property.

9. Apparatus according to claim 8, **characterised in that** the electrodes (31, 33) are in the form of rollers which are in contact with the sandwich sheet strip in motion and which are mounted for rotation in a support, the clamping force of the rollers being adjustable.

10. Apparatus according to either claim 8 or claim 9, **characterised in that** the operating unit (37) is a computer which is loaded with a data-processing programme and which carries out the steps relating to the calculation and comparison with predetermined thresholds and which controls a device for marking the sheet in the event that the sheet is not of the necessary quality.

11. Apparatus according to any one of claims 8 to 10, **characterised in that** the measuring device (35) is an impedance meter.

FIG. 1

FIG. 2